# EUROPÄISCHE PATENTANMELDUNG

(11) **EP 2 564 738 A1**
(43) Veröffentlichungstag der Anmeldung: **06.03.2013**
(21) Anmeldenummer: 12401159.4
(22) Anmeldetag: 19.07.2012
(51) Int. Cl.: A47J 31/44

(54) **Getränkebereiter**

(30) Priorität: 02.09.2011 DE 102011053216
(71) Anmelder: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(57) **Zusammenfassung**

Die Erfindung betrifft einen Getränkebereiter zur Ausgabe von Kaffee, Milch und/oder Milchschaum über eine Auslaufeinheit mit einem entnehmbar in der Auslaufeinheit angeordneten Milchaufschäumer/Milchverteiler sowie einer Milchleitung zur Verbindung des Milchaufschäumers/Milchverteilers mit einem Milchbehälter sowie mindestens einer Halteeinrichtung für die Milchleitung.

Um die Handhabung und Befestigung der Milchleitung bei Nichtgebrauch bzw. bei der manuellen Reinigung zu verbessern, ist der Milchaufschäumer/Milchverteiler (6) mit einer Aufnahme(10) für die Milchleitung (7) ausgebildet, die die Milchleitung (7) in einer Parkposition fixiert.

## Beschreibung

Die Erfindung betrifft einen Getränkebereiter zur Ausgabe von Kaffee, Milch und/oder Milchschaum über eine Auslaufeinheit mit einem entnehmbar in der Auslaufeinheit angeordneten Milchaufschäumer/Milchverteiler sowie einer Milchleitung zur Verbindung des Milchaufschäumers/Milchverteilers mit einem Milchbehälter sowie mindestens einer Halteeinrichtung für die Milchleitung.

Bei den aus dem Stand der Technik bekannten Getränkebereitern kann Milch in einer Verkaufsverpackung neben den Getränkebereiter gestellt werden. Die Milch wird über eine Milchleitung, die in die Verkaufsverpackung gelegt wird, in das Gerät gesaugt. Die Verkaufsverpackung bildet dann einen Behälter, der jedoch nicht Teil des Getränkebereiters ist. Alternativ weisen andere Getränkebereiter einen eigenen Behälter auf, der ebenfalls manuell mit einer Leitung verbunden wird. Die Milchleitung wird verwendet, um Milch zur Herstellung von Getränken aus Milch oder Milch enthaltende Getränke anzusaugen. Die Milch wird dem in der Auslaufeinheit entnehmbar angeordneten Milchaufschäumer/Milchverteiler zugeführt, zum Beispiel zum Erhitzen und/oder zum Aufschäumen. Wird der in der Auslaufeinheit integrierte Milchaufschäumer/Milchverteiler nicht genutzt, kann das behälterseitige Ende der Milchleitung in eine Aufnahme in der Abtropfschale Getränkebereiters gesteckt werden. Wird der Milchaufschäumer/Milchverteiler zur manuellen Reinigung aus der Auslaufeinheit entnommen, muss zunächst die Milchleitung entfernt werden.

Der Erfindung stellt sich das Problem, die Handhabung und Befestigung der Milchleitung bei Nichtgebrauch bzw. bei der manuellen Reinigung zu verbessern.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass die Milchleitung direkt am entnehmbar angeordneten Milchaufschäumer/Milchverteiler in einer Parkposition fixiert werden kann. Dadurch kann das behälterseitige Ende der Milchleitung mit seiner Öffnung so positioniert werden, dass ein Abtropfen von geringen Restmilchmengen aus der Milchleitung verhindert wird. Dies ist insbesondere dann vorteilhaft, wenn Milch in den Behälter nachgefüllt werden soll oder eine Verkaufsverpackung gewechselt wird. Ein weiterer Vorteil liegt darin, dass der Milchaufschäumer/Milchverteiler zusammen mit der Milchleitung mit einem Handgriff für einen manuellen Reinigungsvorgang entnommen werden kann.

Ein Ausführungsbeispiel der Erfindung ist in den Zeichnungen rein schematisch dargestellt und wird nachfolgend näher beschrieben. Es zeigt
- Figur 1: Eine Ansicht eines Getränkebereiters,
- Figur 2: schematisch die Auslaufeinheit am Gerät mit einer Schnittdarstellung des Milchaufschäumers/Milchverteilers,
- Figur 3: die Auslaufeinheit als Einzelheit,

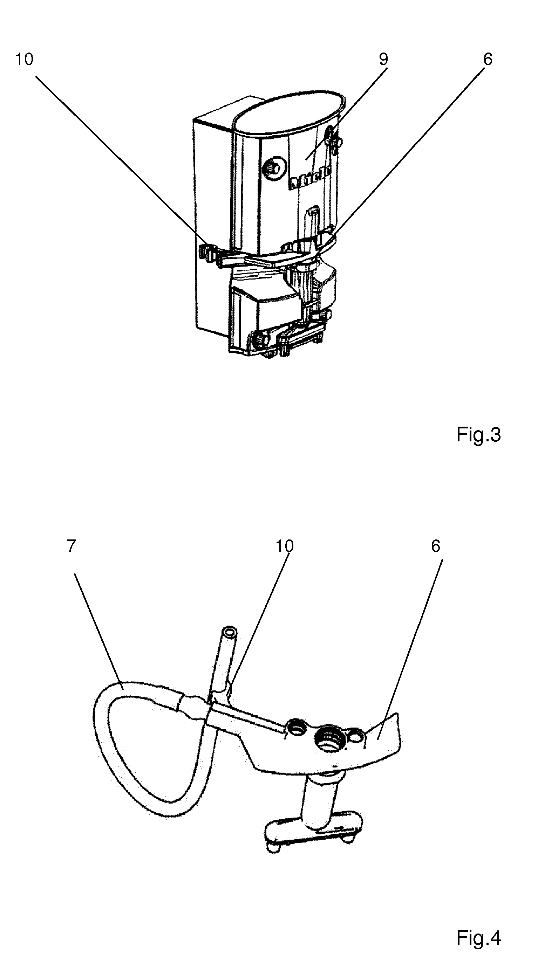

- Figur 3: den Milchaufschäumer/Milchverteiler mit Darstellung der Aufnahme für die Milchleitung

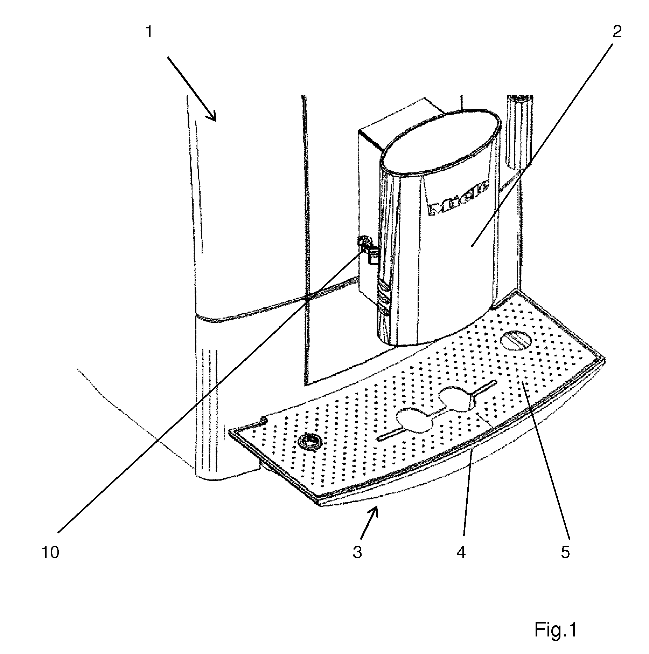

In der Figur 1 ist ein Getränkebereiter 1 zur Ausgabe von Kaffee, Milch und/oder Milchschaum über eine Auslaufeinheit 2 gezeigt. Unter der Auslaufeinheit 2 ist eine Abstellfläche 3 für ein Gefäß angeordnet. Die Abstellfläche 3 weist eine Abtropfschale 4 mit einem darauf angeordneten Abtropfgitter 5 auf.

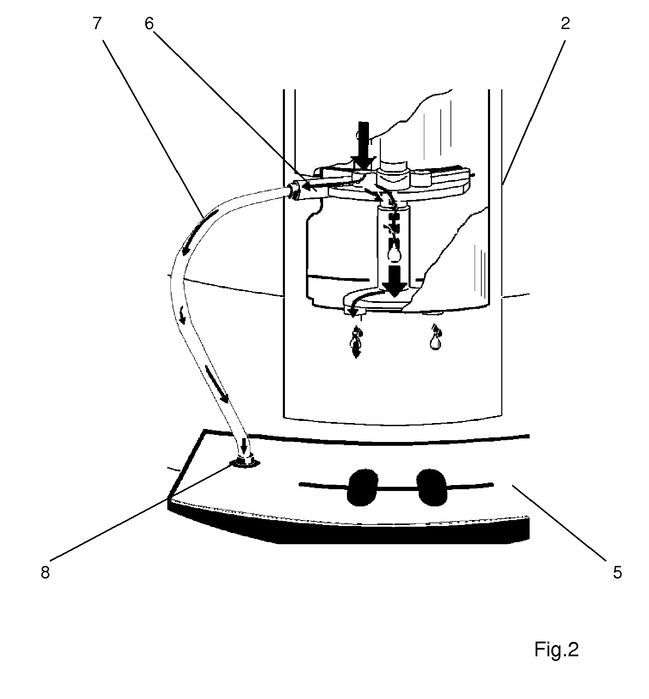

Figur 2 zeigt schematisch die Auslaufeinheit 2 am Gerät mit einer Schnittdarstellung des Milchaufschäumers/Milchverteilers 6. Der Milchaufschäumer/Milchverteiler 6 ist entnehmbar in der Auslaufeinheit 2 angeordnet. Der Milchaufschäumer/Milchverteiler 6 kann über die Milchleitung 7 mit einem hier nicht dargestellten Milchbehälter verbunden werden. In der Figur 2 ist die Milchleitung 7 in einer Reinigungsposition dargestellt. Für einen Spülvorgang mit heißem Wasser wird das milchbehälterseitige Ende der Milchleitung 7 in eine Aufnahme 8 im Abtropfgitter 5 eingesteckt und für den Spülvorgang fixiert.

Figur 3 zeigt die Auslaufeinheit 2 als Einzelheit mit Darstellung des Milchaufschäumers/Milchverteilers 6 in einem Teilschnitt unter der Abdeckung 9 der Auslaufeinheit 2. An dem Milchaufschäumer/Milchverteiler 6 ist eine Aufnahme 10 angeordnet, die bei geschlossener Abdeckung 9 seitlich aus der Auslaufeinheit 10 hinaus ragt. In der Aufnahme 10 wird die Milchleitung 7 in einer Parkposition fixiert.

Figur 4 zeigt den Milchaufschäumer/Milchverteiler 6 mit Darstellung der Aufnahme 10 für die Milchleitung 7 als Einzelheit. Der Milchaufschäumer/Milchverteiler 6 kann zur Reinigung bei geöffneter Abdeckung 9 gemeinsam mit der in der Aufnahme 10 fixierten Milchleitung 7 entnommen werden. Die Aufnahme 10 ist in der Art einer Rohrklemmen ausgebildet und vorzugsweise direkt an den Milchaufschäumer/Milchverteiler 6 angeformt.

## Patentansprüche

1. Getränkebereiter (1) zur Ausgabe von Kaffee, Milch und/oder Milchschaum über eine Auslaufeinheit (2) mit einem entnehmbar in der Auslaufeinheit (2) angeordneten Milchaufschäumer/Milchverteiler (6 ) sowie einer Milchleitung (7) zur Verbindung des Milchaufschäumers/Milchverteilers (6) mit einem Milchbehälter (7) sowie mindestens einer Aufnahme (8/10) für die Milchleitung (7),
**dadurch gekennzeichnet,**
**dass** der Milchaufschäumer/Milchverteiler (6) mit einer Aufnahme(1 0) für die Milchleitung (7) ausgebildet ist, die die Milchleitung (7) in einer Parkposition fixiert.

2. Getränkebereiter nach Anspruch 1,
**dadurch gekennzeichnet,**
**dass** die Aufnahme (10) in der Art einer Rohrklemme ausgebildet ist.
